Europäisches Patentamt

European Patent Office

Office européen des brevets

(11) Publication number: **0 493 981 A2**

# EUROPEAN PATENT APPLICATION

(21) Application number: **91312094.5**

(22) Date of filing: **30.12.91**

(51) Int. Cl.⁵: **C09C 1/00**

(30) Priority: **31.12.90 JP 416805/90**

(43) Date of publication of application:
**08.07.92 Bulletin 92/28**

(84) Designated Contracting States:
**DE FR GB**

(71) Applicant: **Nippon Paint Co., Ltd.**
**2-1-2, Oyodokita, Kita-ku**
**Osaka-shi Osaka-fu(JP)**

(72) Inventor: **Ishihara, Hajime**
**8-19, Shinchujo-cho**
**Ibaraki-shi, Osaka-fu(JP)**
Inventor: **Nagashima, Yukinori**
**4, Hanazonoteranonakamachi, Ukyo-ku**
**Kyoto-shi, Kyoto-fu(JP)**

(74) Representative: **Perry, Robert Edward**
**GILL JENNINGS & EVERY 53-64 Chancery**
**Lane**
**London WC2A 1HN(GB)**

(54) **Recurrent brightening coating compositions, coats and coated products.**

(57) A recurrent brightening coating composition comprising a scaly pigment in which a metal coat is formed on the surface of glass flakes having the smooth surface, said scaly pigment containing particles of 20 to 80 μm in a particle size in an amount of not less than 40 % by weight. There are also disclosed a recurrent brightening coat and a recurrent brightening coated product.

EP 0 493 981 A2

## BACKGROUND OF THE INVENTION

The present invention relates to a recurrent brightening coating composition, a coat and a coated product, more particularly, it relates to a coating composition providing novel appearance to household articles, household appliances, automobiles, etc., a coat and a coated product wherein said coating composition is used.

## BACKGROUND OF THE INVENTION

Metallic pigments (e.g. aluminum flakes, tin flakes, stainless steel flakes, etc.), mica, iron oxide flakes (generally referred to as "M10"), phthalocyanine flake and the like are mainly used as a bright material for a conventional brightening coating composition.

The coating composition in which the above brightmaterial is formulated is used for paints such as metallic color, mica color and the like, and it stirs up a demand as a top coat of automobiles from a viewpoint of design effect.

The coat formed by using the coating composition in which the above bright material is formulated shows brightening property by sunlight during daytime, but does not show it during nighttime even if it is illuminated by lighting fittings. Also, a reflective tape on which a coating composition containing glass beads is applied shows no brightness even if it is illuminated during the nighttime, but reflects the light of the lighting fittings.

## OBJECTS OF THE INVENTION

One object of the present invention is to provide a recurrent brightening coating composition which, when coated, not only reflects light if it is illuminated during the nighttime or in a dark place, but also shows brightness.

Another object of the present invention is to provide a coat having recurrent brightening property.

Still another object of the present invention is to provide a coated product having recurrent brightening property.

These objects as well as other objects and advantages of the present invention will become apparent to those skilled in the art from the following description.

## SUMMARY OF THE INVENTION

According to the study of the present inventors, the reason that the coat containing the above metallic flakes, mica, iron oxide flakes, phthalocyanine flakes and the like shows no brightening property even if it is illuminated during the nighttime was as follows. Namely, it is because the surface smoothness of these pigments is low, thereby, gloss and brightness is low. Since the metal flakes are made by the production process employing grinding in a ball mill, their surfaces is irregular. Since the iron oxide flakes are a product synthesized by employing crystal growth, their surfaces are also irregular. Since the mica is a crystalline material of natural minerals, the surface is irregular, too. Since the phthalocyanine flakes are a crystalline product by phthalocyanine synthesis, the surface is irregular.

Thus, the present inventors has studied about scaly pigments having high surface smoothness, especially those prepared by forming a metal coat on the surface of glass flakes having smooth surface by electroless plating and the like. The scaly pigments in a coated film reflect light when illuminated by light in a dark or a nighttime, but show poor brightness. The reason has been researched and, as a result, it has been found that, in order to obtain brightness when the coat is illuminated during the nighttime, it is necessary that the scaly pigment having high surface smoothness contains particles having a specific range of a particle size in a specific range of amount. When a coat is made by using a coating composition in which such a specific pigment is formulated, the resulting coat has visual effects that can not be obtained by a conventional coating composition, namely, such characteristics that it shows metallic effects when it is illuminated during the nighttime or in a dark place (the present inventors named such a property "recurrent brightening property").

Thus, the present invention has been accomplished based on such knowledge.

That is, according to the present invention, there is provided a recurrent brightening coating composition comprising a scaly pigment (hereinafter, sometimes, referred to as "metal coated glass flake pigment") in which a metal coat is formed on the surface of glass flakes having the smooth surface, said metal coated glass flake pigment containing particles of 20 to 80 $\mu$m in a particle size in an amount of not less than 40 %

2

by weight.

The present invention also provides a recurrent brightening coat formed by using the coating composition.

Further, the present invention also provides a recurrent brightening coated product comprising the coat formed by the coating composition.

## DETAILED DESCRIPTION OF THE INVENTION

The above specific metal coated glass flake pigment is that in which a metal coat is formed on the surface (at least smooth surface of the whole surface) of glass flakes having the smooth surface. The term "glass flakes having the smooth surface" used herein means glass flakes which are produced by melt-forming, etc. and are not subjected to a roughing treatment on their surfacee. The metal coat formed on the surface of the glass flakes has high surface smoothness in comparison with the above conventional metal flakes, and gloss and brightness are also high. The formation of the metal coat is conducted, for example, by electroless plating. However, it is not limited to this and the metal coat may be formed by other methods. Examples of the metal coated glass flake pigment include one which is commercially available from Nippon Sheet Glass Co., Ltd. under the trade name of Metashine, e.g. a pigment in which the surface of a glassy scaly base is plated with a metal. The surface of the pigment has complete mirror smoothness and regularly reflects right (having mirror effect) and, therefore, it completely or almost reflects light.

It is necessary that the metal coated glass flake used in the present invention contains particles having a particle size of 20 to 80 $\mu$m, preferably 30 to 60 $\mu$m in an amount of not less than 40 % by weight, preferably not less than 80 % by weight. The rest thereof is occupied by particles having a particle size of less than 20 $\mu$m. In order to only obtain recurrent brightening property, it is preferred that the particle size distribution spreads toward more coarse particle side. However, in the case of applying to a top coat of automobiles, etc., when there is a lot of particles having the particle size of more than 80 $\mu$m, an end of the pigment extrudes on the coat surface and, therefore, the coat surface does not become smooth, and it is troublesome. In addition, when there is too many particles having a particle size of less than 20 $\mu$m, recurrent brightening property can not be obtained. Examples of the above glassy scaly bases include C glass (corrosion-resistant glass) comprising $SiO_2$ (65 % by weight), ZnO (4 % by weight), $B_2O_3$ (5 % by weight), $Na_2O$ and the rest (26 % by weight), a thickness of which being 2±1 $\mu$m but it is not limited to this.

As the metal coat which is formed on the surface of the glassy scaly base by plating, for example, there are normally metal coats of gold, silver, nickel, platinum, copper, palladium, cobalt, titanium and the like. Among them, gold or nickel is particularly preferred because a metal layer which is particularly superior in acid resistance, alkali resistance, weathering resistance, water resistance and seawater resistance is formed by plating. Further, in the case of silver plating, when a predetermined anti-surface oxidation treatment (e.g. silicone oxide coating treatment, etc.) is provided, the metal coat shows more high weathering resistance, and it is preferred. The thickness of the metal coat is about 0.05 to 0.20 $\mu$m. The metal coat glass flake pigment used in the present invention may has at least two metal layers on the surface of the above glassy scaly base. In that case, it is not necessary that whole metal layers are formed by electroless plating.

The above metal coated glass flake contains particles having the above specific range of the particle size in the amount which is much smaller than 40 % by weight and, therefore, it is preferred that pariicles having a particle size of more than 80 $\mu$m is eliminated by #200 mesh Tyler standard sieve so that it contains particles having a particle size of 20 to 80 $\mu$m in an amount of not less than 40 % by weight. In that case, if necessary, particles having a particle size of less than 20 $\mu$m may be eliminated by #600 mesh Tyler standard sieve or not.

The recurrent brightening coating composition of the present invention contains the above specific metal coated glass flake pigment in an amount of 0.5 to 15 % by weight. When the amount is less than 0.5 % by weight, recurrent brightening property may becomes inferior and, when the amount exceeds 15 % by weight, gloss may be deteriorated. Further, in addition to the above specific metal coated glass flake pigment, desired other pigments, for example, scaly pigments such as aluminum flakes, mica, iron oxide flake pigment, phthalocyanine flake pigment may be used in an amount of 0 to 100 parts by weight based on 100 parts by weight of the above metal coat glass flake pigment, or color pigments such as carbon black, transparent iron oxide pigment, quinacridone pigment, perylene pigment, phthalocyanine pigment, dioxadine pigment, indanthrene pigment, flavanthrone pigment and the like may be used in an amount of 0 to 300 parts by weight based on 100 parts by weight of the above metal coat glass flake pigment. When the color pigment is used in combination with the metal coat glass flake pigment, a desired color coat having recurrent brightening property can be obtained.

The above mentioned pigment is formulated into a paint mixture which is used for automobiles and the like, for example a thermosetting acrylic lacquer for automobiles, an acrylic lacquer for auto-repair, a urethane lacquer, an acrylic modified urethane lacquer and the like. They can be pigmentated with disper stirring, as is the same as aluminum flake-contained a base coating composition containing aluminum flakes. Further, if necessary, they may be mixed with pigments having high transparency or coating containing other flake pigments.

In the above mentioned paint mixture, the main resin component includes acrylic resin, polyester resin, polyurethane resin and the like. They may be used alone or in combination thereof. Also, any combination of these reins with a curing agent (e.g. melamine resin, isocyanate resin) and the like may be used. The amount of the resin component and solvent formulated is, for example, about 0.5 to 15 % by weight of the metal coat glass flake pigment, about 30 to 40 % by weight of the resin component and about 55 to 60 % by weight of the solvent (the total amount of the metal coated glass flake pigment, resin component and solvent is 100 % by weight).

If necessary, the coating composition of the present invention may be diluted with a thinner and the like upon use.

If necessary, UV absorber, anti-setting agent and the like may be formulated in the coating composition of the present invention.

The coating composition of the present invention can be produced by the same method and equipment as those of a conventional metallic coating composition, however, the production process and equipment thereof are not specifically limited.

In order to obtain the coat having recurrent brightening property and the coated product having recurrent brightening property by using the coating material, for example, the following method is employed. Examples of the substrate to be coated include parts of automobiles, household appliances, household articles and the like. The material is not specifically limited and examples thereof include metal, plastic, wood and the like. If necessary, the substrate to be coated may suitably be subjected to phosphating treatment, electrocoating, primer coating, intermediate coating and the like, in advance. The recurrent brightening coating composition of the present invention is applied on the substrate to be coated and requisite numbers of layers of the color pigment-contained coating material and/or clear material are formed thereon. Recoating may be conducted after drying and bakeing or without them. The recurrent brightening coating composition of the present invention is applied by spray coating but is not limited to this coating method. Baking is conducted, for example, under the conditions of the temperature of 140 to 200°C for 30 to 3 minutes.

The thickness of the recurrent brightening coating composition of the present invention is, for example, 15 to 30 $\mu$m after baking. In the case of forming a clear layer thereon, for example, 1 to 2 of clear layers having a thickness of 25 to 40 $\mu$m may be formed.

Examples of the coated product of the present invention include automobiles, household appliances, household articles and the like but is not limited to them.

When a coating composition is formed by using a recurrent brightening coating composition comprising a scaly pigment in which a metal coat is formed on the surface of glass flakes having the smooth surface, said scaly pigment containing particles of 20 to 80 $\mu$m in a particle size in an amount of not less than 40 % by weight, the scaly pigment contained in the coat glitteringly reflects light during in a nighttime or in a dark place, not to mention during the daytime, even if a light source is several meters away from the coat. Since the surface of aluminum flakes, mica and the like is not completely smooth and has extremely fine irregularity, it does not reflects light regularly.

EXAMPLES

The following Examples and Comparative Examples further illustrate the present invention in detail but are not to be construed to limit the scope thereof. In the Examples and Comparative Examples, "parts" and "% s'" are by weight unless otherwise stated.

In the Examples and Comparative Examples, as the above metal coat glass flake pigment, a silvered glass flake pigment (commercially available from Nippon Sheet Glass Co., Ltd. under the trade name of Metashine Silver RCFSX-2015PS) was used after the particle size distribution was adjusted. The commercially available product thereof contains 40 % by weight of particles of 20 to 80 $\mu$m and 60 % by weight of particles of less than 20 $\mu$m.

Firstly, Examples and Comparative Examples for confirming the effect of the particle size distribution of the metal coat glass flake pigment on recurrent brightening property are shown below.

Examples 1 to 9 and Comparative Examples 1 and 2

To a silvered glass flake pigment (10.4 parts) having the particle size distribution shown in Tables 1 and 2 was added toluene (8.4 parts), and the mixture was stirred to uniformly disperse the pigment in toluene. Then, to the resulting dispersion was added 59.0 parts of thermosetting acrylic resin varnish [Almatex 448-O manufactured by Mitsui Toatsu Chemicals Co., Ltd.: 48 % of resin solid content, 52 % of solvent (toluene; 46.8 %, n-butanol; 2.6 %, methyl isobutyl ketone; 59.0 %)], 11.8 parts of melamine resin varnish [Uban-20N-60 manufactured by Mitsui Toatsu Chemicals Co., Ltd.: 60 % of resin solid content, 40 % of solvent (xylene; 24 %, n-butanol; 16 %)] and 14.5 parts of a solvent [a mixed solution of toluene and butanol in a weight ratio of 65/35], and the mixture was stirred with a disper for 30 minutes to prepare a coating solution of the present invention.

Examples 10 to 18 and Comparative Examples 3 and 4

After an abraded steel plate (500 mm in length, 300 mm in width and 0.8 mm in thickness) was subjected to a pretreatment with a phosphating solution [Guranodine SD5000 manufactured by Nippon Paint Co., Ltd.] by a conventional method, the phosphated steel plate was electrocoated with a cation electrocoating composition [Powertop U-30 manufactured by Nippon Paint Co., ltd., epoxy-urethane cation resin coating composition] by a conventional method and heated at 160°C for 0.5 hours to form an electrodeposited coat having a dry film thickness of 20 $\mu$m. Then, an intermediate coating [Olga P-2 Gray manufactured by Nippon Paint Co., Ltd., polyester melamine resin coating] was applied thereon and heated at 140°C for 0.5 hours to form an intermediate coat having a dry film thickness of 35 $\mu$m.

Each coating solution of the above Examples 1 to 9 and Comparative Examples 1 and 2 was diluted with a thinner for coating [Nippe 298 manufactured by Nippon Paint Co., Ltd.] respectively, so as to obtain the viscosity of which No.4 Ford cup value at 20°C was 13 seconds. By using a spray gun [REA manufactured by Nippon Lansburg Co., Ltd.: nozzle cup No.6], an electrostatic spray coating [by providing a flushing-off time of 1 minute between the first and second flushing, recoating was conducted twice] was provided on the above intermediate coating with the diluted coating to form an electrostatic coating having a dry film thickness of 15 $\mu$m. Thereafter, a clear coating material [Superlac 0-128M-1 manufactured by Nippon Paint Co., Ltd., acryl melamine resin coating] was applied thereon by a wet-on wet technique and dried at 140°C for 20 minutes. Then, the above clear coating was further applied thereon and dried at 140°C for 20 minutes to form a coat having dry total film thickness of 140 $\mu$m. Thus, a coated test plate corresponding to Examples 1 to 9 and Comparative Examples 1 and 2 was prepared, respectively.

For these coated test plates, recurrent brightening property was confirmed. That is, in a darkroom (in the state shutting off sunlight from the outside with a blind and the like and turning off the light during the daytime), light is irradiated with a flashlight at the position which is 3 meters away from the coated test plate of 10 cm x 15 cm in the perpendicular direction. At the same time, the coated surface was visually observed at the position having an angle of 5° to the light source (3 meters away from the coated test plate) and evaluated according to the following criteria.

A: recurrent brightening property is high
B: recurrent brightening property is medium
C: recurrent brightening property is low
D: recurrent brightening property is extremely low
E: no recurrent brightening property

In the above criteria, A to C stand the test and are shown in order of good recurrent property.

The following tests were conducted for the above coated test samples and the results are shown in Tables 1 and 2 below.

Gloss (60°) was measured by using a digital Variable Glass Meter (UGV-5K manufactured by Suga Test Instruments Co., Ltd.).

Regarding hot water resistance, a test plate was dipped in a hot water at 40°C for 10 days and the coat appearance was visually observed to examine whether there is color change, blister, etc. (+) or not (-).

Regarding chemical resistance, a test plate was dipped in 1N-$H_2SO_4$ at 20°C for 24 hours and the coat surface was visually observed to examine whether there is color change, blister, etc. (+) or not (-).

The results are shown in Tables 1 and 2.

Table 1

| Sample No. of coating | Particle size distribution of silvered glass flake pigment | Sample No. of coated plate | RBP* | Physical properties of coat | | |
| --- | --- | --- | --- | --- | --- | --- |
| | | | | Gloss (60°) | hot water resistance | chemical resistance |
| Example 1 | amount of particles of 20 to 80 μm is 20 % by weight and amount of particles of less than 20 μm is 8C % by weight | Example 10 | C | 95 | – | – |
| Example 2 | amount of particles of 20 to 80 μm is 30 % by weight and amount of particles of less than 20 μm is 70 % by weight | Example 11 | B | 95 | – | – |
| Example 3 | amount of particles of 20 to 80 μm is 40 % by weight and amount of particles of less than 20 μm is 60 % by weight | Example 12 | A | 94 | – | – |
| Example 4 | amount of particles of 30 to 80 μm is 10 % by weight and amount of particles of less than 30 μm is 90 % by weight | Example 13 | C | 94 | – | – |
| Example 5 | amount of particles of 30 to 80 μm is 20 % by weight and amount of articles of less than 30 μm is 80 % by weight | Example 14 | B | 95 | – | – |
| Examples 6 | amount of particles of 30 to 80 μm is 30 % by weight and amount of particles of less than 30 μm is 70 % by weight | Example 15 | A | 96 | – | – |

*: recurrent brightening property

EP 0 493 981 A2

Table 2

| Sample No. of coating | Particle size distribution of silvered glass flake pigment | Sample No. of coated plate | Physical properties of coat | | | |
|---|---|---|---|---|---|---|
| | | | RBP* | Gloss (60°) | hot water resistance | chemical resistance |
| Example 7 | amount of particles of 40 to 80 μm is 0 % by weight and amount of particles of less than 40 μm is 100 % by weight | Example 16 | B | 94 | - | - |
| Example 8 | amount of particles of 40 to 80 μm is 10 % by weight and amount of particles of less than 40 μm is 90 % by weight | Example 17 | A | 95 | - | - |
| Example 9 | amount of particles of 30 to 60 μm is 80 % by weight and amount of particles of less than 30 μm is 20 % by weight | Example 18 | A | 94 | - | - |
| Comp. Example 1 | amount of particles of 30 to 80 μm is 0 % by weight and amount of particles of less than 30 μm is 100 % by weight | Comp. Example 3 | D | 95 | - | - |
| Comp. Example 2 | amount of particles of 20 to 80 )m is 0 % by weight and amount of articles of less than 20 μm is 100 % by weight | Comp. Example 4 | E | 94 | - | - |

*: recurrent brightening property

As is shown in Tables 1 and 2, when the metal coat glass flake pigment comprising only particles of less than 20 μm is used, no recurrent brightening property is obtained. Further, when the metal coat glass flake pigment containing particles of 20 to 80 μm in an amount of less than 40 % by weight is used, there was a disadvantage that recurrent brightening property becomes inferior. When the metal coat glass flake pigment containing particles of more than 80 μm is used, it is necessary to make the thickness of a clear

7

film more large in order to make the coating surface smooth, and it was not practical. The coated test plate of the Examples had a conventional property as a coat.

## Examples 19 to 23 and Comparative Examples 5 and 6

According to the same manner as that described in Example 1 except for using the same silver plated glass flake pigment as that used in Example 3 and changing the amount of a raw material to the amount as shown in Tables 3 and 4, a coating solution as the coating composition of the present invention was obtained.

As the aluminum pigment, Alpaste 7130N (solid content of 65 %) manufactured by Toyo Aluminum K.K. was used in Example 10 and Comparative Example 3, and Alpaste MG500 (solid content of 75%) was used in Comparative Example 4. As the titanium oxide ($TiO_2$) coat mica flake pigment, Iriodine 103WII manufactured by Merck Japan Co., Ltd. was used. As the plate-like iron oxide pigment, F.O.R. manufactured by Dainichi Seika Color & Chemicals MFG Co., Ltd. was used. As the phthalocyanine flake pigment, Paliochrome Bluegold FA4071 manufactured by BASF Lacke + Fasern AG was used.

A blue coating solution was used for illustrate one embodiment using a color pigment was used. This blue coating solution was prepared as follows. 5.2 Parts of cyanine blue as a blue pigment [G-314 manufactured by Sanyo Color Works Co., Ltd.], 62.2 parts of thermosetting acrylic resin varnish [Almatex NT-U-448 manufactured by Mitsui Toatsu Chemicals Co., Ltd.: 48 % of resin solid content, 52 % of solvent (toluene; 46.8 %, n-butanol; 2.6 %, methyl isobutyl ketone; 2.6 %);], 12.4 parts of melamine resin varnish [Uban-20N-60: 60 % of resin solid content, 40 % of solvent (xylene; 24 %, n-butanol; 16 %)] and 20.2 parts of a solvent [toluene/butanol = 65/35 (weight ratio)] were mixed and the same amount (about 100 ml) of glass beads of 2 mm $\phi$ was added thereto. Then, the mixture was stirred by a disper for 60 minutes and glass beads were removed by filtering to prepare a coating solution.

## Examples 24 to 28 and Comparative Examples 7 and 8

According to the same manner as that described in Example 10, a coated test plate was made by using each coating solution of Examples 19 to 23 and Comparative Examples 5 and 6, respectively.

According to the same manner as that described above, gloss, hot water resistance and chemical resistance were examined for these coated test plates. The results are shown in Tables 3 and 4 below.

## Table 3

Formulation of coating (parts)
(parts)

| | Example No. | | | | | Comp. Example No. | |
|---|---|---|---|---|---|---|---|
| | 19 | 20 | 21 | 22 | 23 | 5 | 6 |
| Silvered glass flake pigment[*1] | 4.93 | 4.93 | 4.93 | 4.93 | 10.40 | – | – |
| Aluminum pigment | 7.58[*2] | – | – | – | – | 16.00[*2] | 13.87[*3] |
| $TiO_2$ coated mica flake pigment[*4] | – | 4.93 | – | – | – | – | – |
| Plate iron oxide pigment[*5] | – | – | 4.93 | – | – | – | – |
| Phthalocyanine flake pigment[*6] | – | – | – | 4.93 | – | – | – |
| Blue coating solution[*7] | – | – | – | – | 100.00 | – | – |
| Toluene | 8.40 | 8.40 | 8.40 | 8.40 | 8.40 | 8.40 | 8.40 |
| Thermosetting acrylic resin varnish[*8] | 59.00 | 59.00 | 59.00 | 59.00 | 59.00 | 59.00 | 59.00 |
| Melamine resin varnish[*9] | 11.80 | 11.80 | 11.80 | 11.80 | 11.80 | 11.80 | 11.80 |
| Solvent[*10] | 14.50 | 14.50 | 14.50 | 14.50 | 14.50 | 14.50 | 14.50 |
| Total amount | 106.21 | 103.56 | 103.56 | 103.56 | 204.10 | 109.70 | 109.70 |

EP 0 493 981 A2

EP 0 493 981 A2

*1:   the amount of particles of 20 to 80 µm is 40 % by weight and
      the amount of particles of less than 20 µm is 60 % by weight

*2:   the amount of particles of 5 to 60 µm is 100 % by weight

*3:   the amount of particles of 20 to 80 µm is 40 % by weight

*4:   the amount of particles of 5 to 48 µm is 100 % by weight

*5:   the amount of particles of 5 to 15 µm is 100 % by weight

*6:   the amount of particles of 5 to 50 µm is 100 % by weight

*7:   SpM-91 manufactured by Nippon Paint Co., Ltd.

*8:   Almatex 448-O manufactured by Mitsui Toatsu Chemicals Co., Ltd.

*9:   Uban 20N-60 manufactured by Mitsui Toatsu Chemicals Co., Ltd.

*10:  toluene/n-butanol = 65/35 (weight ratio)

Table 4

| Physical properties of coat | No. of coating | Ex.19 | Ex.20 | Ex.21 | Ex.22 | Ex.23 | Comp. Ex.5 | Comp. Ex.6 |
| | No. of coated test plate | Ex.24 | Ex.25 | Ex.26 | Ex.27 | Ex.28 | Comp. Ex.7 | Comp. Ex.8 |
|---|---|---|---|---|---|---|---|---|
| Gloss (60°) | | 95 | 94 | 95 | 95 | 94 | 95 | 95 |
| Hot water resistance | | - | - | - | - | - | - | - |
| Chemical resistance | | - | - | - | - | - | - | - |

As is shown in Tables 3 and 4, the coated test plates of the Examples had a conventional property as a coat. According to the same manner as that described above, recurrent brightening property was examined for coated test plates of the Examples and Comparative Examples. As a result, the coated test plate of the Example showed recurrent brightening property, while that of the Comparative Example showed no recurrent brightening property.

As described above, according to the recurrent coating composition of the present invention, a coating composition having strong brightness and recurrent brightening property by an illumination light during the nighttime, which can not be obtained by the conventional coating composition, can be formed.

The recurrent brightening coat and the recurrent brightening coated product of the present invention have recurrent brightening property and, therefore, they are nocticeable even during the nighttime, thereby, it becomes possible to give an impact on the user.

## Claims

1. A recurrent brightening coating composition comprising a scaly pigment in which a metal coat is formed on the surface of glass flakes having the smooth surface, said scaly pigment containing particles of 20 to 80 $\mu$m in a particle size in an amount of not less than 40 % by weight.

2. A recurrent brightening coat comprising the recurrent brightening coating composition of claim 1.

3. A recurrent brightening coated product comprising a recurrent brightening coat of the recurrent brightening coating composition of claim 1 being formed on an article to be coated.

4. A coated product comprising the recurrent brightening coat of claim 2 on the surface of an article to be coated.